# EUROPÄISCHE PATENTANMELDUNG

(11) **EP 1 925 846 A2**
(43) Veröffentlichungstag der Anmeldung: **28.05.2008**
(21) Anmeldenummer: 07019881.7
(22) Anmeldetag: 11.10.2007
(51) Int. Cl.: F16F 13/14, F16F 13/08

(54) **Hydraulisch dämpfendes Aggregatelager**

(30) Priorität: 22.11.2006 DE 102006054882
(71) Anmelder: Carl Freudenberg KG, 69469 Weinheim (DE)
(72) Erfinder: Hettler, Werner, 68309 Mannheim (DE)

(57) **Zusammenfassung**

Hydraulisch dämpfendes Aggregatelager, umfassend ein Traglager (1) und ein Auflager (2), die durch eine Tragfeder (3) aus gummielastischem Werkstoff miteinander verbunden sind und einen Arbeits- (4) und einen Ausgleichsraum (5), die jeweils mit Dämpfungsflüssigkeit (6) gefüllt und durch einen Dämpfungskanal (7) flüssigkeitsleitend verbunden sind, wobei die Tragfeder (3) dem Traglager (1) und dem Auflager (2) ungebunden zugeordnet ist und wobei der Dämpfungskanal (7) durch einen von Traglager (1) und Auflager (2) separat hergestellten Düsenkäfig (8) begrenzt ist.

## Beschreibung

### Technisches Gebiet

Die Erfindung betrifft ein hydraulisch dämpfendes Aggregatelager.

### Stand der Technik

Hydraulisch dämpfende Aggregatelager sind allgemein bekannt, beispielsweise aus der EP 1 336 771 A2. Das vorbekannte Aggregatelager umfasst dabei ein Traglager und ein Auflager, die durch eine Tragfeder aus gummielastischem Werkstoff miteinander verbunden sind. Das Aggregatelager weist einen Arbeits- und einen Ausgleichsraum auf, die jeweils mit Dämpfungsflüssigkeit gefüllt und durch einen Dämpfungskanal flüssigkeitsleitend miteinander verbunden sind. Der Dämpfungskanal bildet einen Bestandteil des Auflagers, was im Hinblick auf eine möglichst universelle Modulbauweise des Aggregateslagers wenig zufriedenstellend ist; bei Verwendung dieses Auflagers ist der Dämpfungskanal mit seiner Geometrie und daraus resultierend seiner Funktion zwingend vorgegeben und kann nicht variiert werden. Eine Veränderung der Dämpfungscharakteristik durch einen abweichend gestalteten Dämpfungskanal kann nur durch eine veränderte Ausgestaltung des Auflagers erreicht werden. Aus der EP 1 672 242 A1 ist ein weiteres Aggregatelager bekannt, bei dem die Tragfeder an das Auflager vulkanisiert ist und bei dem das Auflager zusätzlich die Begrenzung für den Dämpfungskanal bildet.

Auch hier besteht nicht die Möglichkeit einer beliebigen, modularen Zusammenstellung von Tragfeder, Auflager, Traglager und/oder Dämpfungskanal zu einem Aggregatelager.

### Darstellung der Erfindung

Der Erfindung liegt die Aufgabe zugrunde, ein Aggregatelager der vorbekannten Art derart weiterzuentwickeln, dass dieses durch eine Modulbauweise problemlos an die jeweiligen Gegebenheiten des Anwendungsfalles angepasst werden kann. Insbesondere sollen jeweils angepasste Dämpfungssysteme und angepasste Tragfedern zur Anwendung gelangen können, unabhängig von der Gestalt von Traglagern und Auflagern, die jeweils die Anschlussteile bilden.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein hydraulisch dämpfendes Aggregatelager vorgesehen, umfassend ein Traglager und ein Auflager, die durch eine Tragfeder aus gummielastischem Werkstoff miteinander verbunden sind und einen Arbeits- und einen Ausgleichsraum, die jeweils mit Dämpfungsflüssigkeit gefüllt und durch einen Dämpfungskanal flüssigkeitsleitend verbunden sind, wobei die Tragfeder dem Traglager und dem Auflager ungebunden zugeordnet ist und wobei der Dämpfungskanal durch einen von Traglager und Auflager separat hergestellten Düsenkäfig begrenzt ist. Das Traglager und das Auflager bilden die Anschlussteile, durch die das Aggregatelager ein Aggregat mit einem Chassis verbindet. Bei dem Aggregat kann es sich beispielsweise um eine Verbrennungskraftmaschine oder um ein Getriebe handeln, beim Chassis um ein Fahrgestell.
Traglager und Auflager können bei dem erfindungsgemäßen Aggregatelager unverändert und baukastenartig mit unterschiedlichen, an den jeweiligen Anwendungsfall angepassten Tragfedern und/oder unterschiedlichen, an den jeweiligen Anwendungsfall angepassten Düsenkäfigen kombiniert werden, da die Tragfeder dem Traglager und dem Auflager ungebunden zugeordnet ist und der Düsenkäfig, der den Düsenkanal begrenzt, separat von Traglager und Auflager hergestellt ist. Durch eine solche Ausgestaltung lässt sich sehr einfach eine Modulbauweise / ein Baukastensystem erreichen, bei dem mit einer beliebigen modularen Zusammenstellung von Tragfeder, Auflager, Traglager und/oder Dämpfungskanal an den jeweiligen Anwendungsfall gut angepasste Aggregatelager hergestellt werden können. Im Gegensatz zu dem eingangs genannten Stand der Technik, bei dem entweder die Tragfeder mit dem Traglager und/oder dem Auflager verbunden ist und/oder der Dämpfungskanal einen Bestandteil des Auflagers bildet, kann das erfindungsgemäße Aggregatelager einfach und kostengünstig an den jeweiligen Anwendungsfall angepasst werden.

Das Aggregatelager kann kastenförmig ausgebildet sein. Die zuvor beschriebene, erfindungsgemäße Ausgestaltung ist insbesondere für kastenförmig ausgebildete Aggregatelager von Vorteil, weil diese, in der Regel in Frontantriebsfahrzeugen eingesetzten Lager, immer mehr Verbreitung finden. Gleichzeitig können durch die Modulbauweise die Komponenten oftmals sowohl auf der Getriebeseite wie auch auf der Motorseite verwendet werden. Bisher musste aus Festigkeits- bzw. Montagegründen auf die modulare Bauweise, wie man sie von axialsymmetrischen Hydrolagern her kennt, verzichtet werden. Dabei waren hauptsächlich die hohen Anschlagkräfte in Z-Richtung verantwortlich.

Der Düsenkäfig kann in Richtung der eingeleiteten Schwingungen zwischen Arbeits- und Ausgleichsraum angeordnet sein und zwei in Richtung der eingeleiteten Schwingungen benachbart zueinander angeordnete Düsenscheiben aufweisen, wobei in Richtung der eingeleiteten Schwingungen zur Isolierung höherfrequenter, kleinamplitudiger Schwingungen eine Membran aus gummielastischem Werkstoff schwingfähig angeordnet ist. Der Düsenkäfig ist separat hergestellt. Abhängig von den jeweiligen Gegebenheiten des Anwendungsfalles besteht die Möglichkeit, geeignete Düsenscheiben und eine geeignete Membran zu einer vormontierbaren Einheit zusammenzufassen und diese vormontierte Einheit mit den übrigen Bauteilen zum Aggregatelager zu montieren. Die Ausgestaltung der Düsenscheiben und der Membran sind nicht Gegenstand dieser Erfindung. Düsenscheiben und Membran können von dem mit der Konstruktion von Aggregatelagern betrauten Fachmann in geeigneter, an sich bekannter Weise ausgestaltet werden. Die Gestalt der Düsenscheiben und/oder der Membran hängt dabei hauptsächlich von der Höhe der geforderten Dämpfung bzw. Federrate und der jeweils zugehörigen Frequenzlage ab.

Durch das Baukastensystem, das auch den Düsenkäfig, also die Düsenscheiben und die Membran umfasst, kann ein an sich äußerlich gleich aussehendes Aggregatelager zur Lagerung unterschiedlicher Aggregate zur Anwendung gelangen, da der Düsenkäfig an den jeweiligen Einzelfall angepasst ist. Dasselbe gilt für die Tragfeder.

Der Dämpfungskanal kann in Richtung der eingeleiteten Schwingungen einstöckig ausgebildet sein. Dabei mündet der Dämpfungskanal in axialer Richtung einerseits in den Arbeitsraum und in axialer Richtung andererseits in den Ausgleichsraum, wobei sich der Dämpfungskanal entlang 360° erstrecken kann.

Sollte demgegenüber ein Dämpfungskanal erforderlich sein, mit dem tieferfrequente Schwingungen gedämpft werden können, kann ein in Richtung der eingeleiteten Schwingungen doppelstöckiger Dämpfungskanal vorgesehen sein. Die Dämpfung tieffrequenter, großamplitudiger Schwingungen beruht auf Schwingungen der Flüssigkeitssäule der Dämpfungsflüssigkeit innerhalb des Dämpfungskanals. Der Ausgleichsraum ist dabei, wie bekannt, auf seiner dem Arbeitsraum axial abgewandten Seite durch eine rollbalgartig ausgebildete Membran begrenzt, die im Wesentlichen drucklos Volumen aufnimmt, das während der bestimmungsgemäßen Verwendung des Aggregatelagers vom Arbeitsraum in den Ausgleichsraum und wieder zurück verlagert wird.

Um dem Gedanken der Modulbauweise / des Baukastenprinzips weiter verbessert Rechnung zu tragen, kann es vorgesehen sein, dass zwischen dem ersten und dem zweiten Stock innerhalb des Dämpfungskanals ein heraustrennbares Schott angeordnet ist. Je nachdem, für welchen Anwendungsfall der Düsenkäfig eingesetzt wird, kann bedarfsweise das Schott vor der Montage des Düsenkäfigs in das Aggregatelager herausgetrennt werden. Gegebenenfalls werden die beiden Teil-Dämpfungskanäle zu einem wesentlich längeren, bevorzugt doppelt so langen Kanal verbunden. Großamplitudige, tieffrequente Schwingungen lassen sich dadurch besonders effizient dämpfen.

Analog dazu können auch im Gitterbereich der Düsenscheiben des Düsenkäfigs abtrennbare Segmente angebracht sein, um einer optimalen Federratentilgung für Diesel- wie auch für Ottomotoren gerecht zu werden.

Das Traglager und die Tragfeder können von einer kuppelförmigen Anschlaghaube überdeckt sein, wobei die Anschlaghaube mit dem Auflager verbunden ist. Hierbei ist von Vorteil, dass die Anschlaghaube die Funktion einer Wegbegrenzung der Tragfeder erfüllt, und zwar bei den verschiedenen Betriebszuständen sowie im Falle eines Crashs. Ferner ist von Vorteil, dass die Tragfeder, die aus einem gummielastischen Werkstoff besteht, vor nachteiligen, die Gebrauchsdauer verringernden Einflüssen geschützt ist. Das Auflager und die Anschlaghaube bilden ein zweischaliges Gehäuse.

Das Auflager und die Anschlaghaube können jeweils aus Leichtmetall oder Kunststoff bestehen. Die Herstellung erfolgt beispielsweise im Kokillenguss/Druckguss. Gegebenenfalls können auch Strangpressprofile zur Anwendung gelangen, ebenso wie Magnesium. Hierbei ist von Vorteil, dass das gesamte Aggregatelager dadurch nur eine relativ geringe Masse aufweist und einfach und kostengünstig herstellbar ist.

Die Tragfeder und der Düsenkäfig sind jeweils separat hergestellt und einander ungehaftet zugeordnet. Eine solche Ausgestaltung begünstigt das Baukastensystem. Unterschiedliche Tragfedern können mit unterschiedlichen Düsenkäfigen kombiniert werden, um dadurch auf einfache Weise zu einem Aggregatelager mit den gewünschten Gebrauchseigenschaften zu gelangen.

Die Tragfeder und der Düsenkäfig können zwischen dem Auflager und der Anschlaghaube form- und/oder kraftschlüssig festgelegt sein. Beispielsweise kann die kraftschlüssige Festlegung dadurch erfolgen, dass die Tragfeder und der Düsenkäfig zwischen dem Auflager und der Anschlaghaube eingeklemmt sind.

### Kurzbeschreibung der Zeichnung

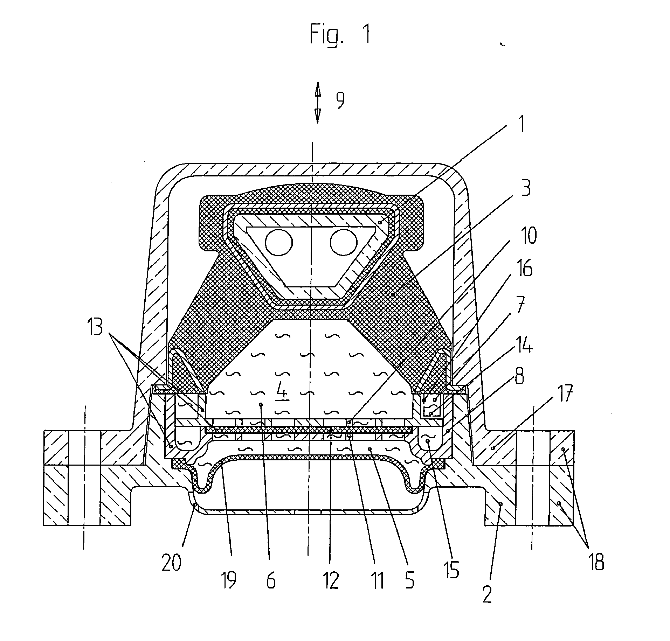

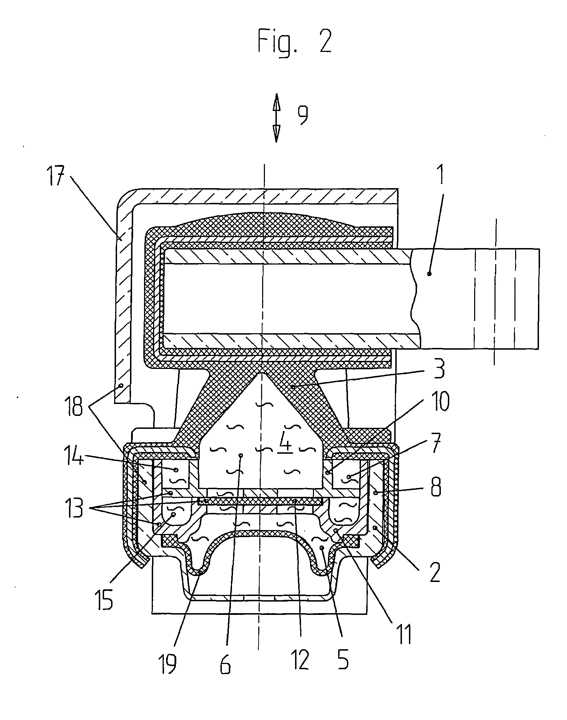

Ein Ausführungsbeispiel des erfindungsgemäßen hydraulisch dämpfenden Aggregatelagers ist in den Figuren 1 und 2 gezeigt. Diese zeigen ein kastenförmiges Ausführungsbeispiel in längs und quer geschnittener Darstellung.

### Ausführung der Erfindung

In Fig.1 ist das Aggregatelager in längs geschnittener Darstellung gezeigt. In Fig. 2 ist das Aggregatelager in quer geschnittener Darstellung gezeigt. Das Aggregatelager umfasst ein Traglager 1 und ein Auflager 2, die durch eine Tragfeder 3 aus gummielastischem Werkstoff miteinander verbunden sind. Der Arbeitsraum 4 und der Ausgleichsraum 5 sind jeweils mit Dämpfungsflüssigkeit 6 gefüllt und durch einen Dämpfungskanal 7 flüssigkeitsleitend miteinander verbunden. Der Dämpfungskanal 7 ist ein Bestandteil eines Düsenkäfigs 8, der sich aus zwei axial zueinander benachbart angeordneten Düsenscheiben 10, 11 zusammensetzt und einer Membran 12 aus gummielastischem Werkstoff, die schwingfähig zwischen den beiden Düsenscheiben, 10, 11 angeordnet ist. Die Membran 12 ist in Richtung der eingeleiteten Schwingungen 9 zur Isolierung höherfrequenter, kleinamplitudiger Schwingungen vorgesehen. Die Düsenscheiben 10, 11 sind in Richtung des angrenzenden Arbeits- 4 und Ausgleichsraums 5 durchbrochen, so dass die Membran 12 unmittelbar mit der Dämpfungsflüssigkeit 6 beaufschlagbar ist. Der Dämpfungskanal 7 ist in dem hier gezeigten Ausführungsbeispiel in Richtung der eingeleiteten Schwingungen 9 doppelstöckig ausgebildet, wobei ein hier gestrichelt angedeutetes Schott 16 aus dem Dämpfungskanal 7 vor der Montage des Aggregatelagers herausgetrennt wurde. Die Tragfeder 3 ist den Traglager 1 und dem Auflager 2 ungebunden zugeordnet, wobei der Dämpfungskanal 7 durch einen von Traglager 1 und Auflager 2 separat hergestellten Düsenkäfig 8 begrenzt ist. Bei einer derartigen Ausgestaltung ist von Vorteil, dass sich dadurch auf einfache Weise Aggregatelager im Baukastensystem zusammenstellen lassen. Unterschiedliche Düsenkäfige 8 können mit unterschiedlichen Tragfedern 3 kombiniert werden, wobei die Düsenkäfige 8 und Tragfedern 3 auch mit unterschiedlichen Traglagern 1 und Auflagern 2 kombiniert werden können. Diese Flexibilität in der Gestaltung der Aggregatelager und die Möglichkeit, die Gebrauchseigenschaften des Aggregatelagers durch das Baukastensystem in einfacher Weise sehr gut an die jeweiligen Gegebenheiten des Anwendungsfalles anpassen zu können, sind von hervorzuhebendem Vorteil.

Der Ausgleichsraum 5 ist auf seiner dem Düsenkäfig 8 axial abgewandten Seite durch einen Rollbalg 19 verschlossen, der geeignet ist, aus dem Arbeitsraum 4 in den Ausgleichsraum 5 verdrängte Dämpfungsflüssigkeit 6 im Wesentlichen drucklos aufzunehmen. Auf der dem Düsenkäfig 8 axial abgewandten Seite des Rollbalgs 19 ist das Auflager 2 mit einer Belüftungsöffnung 20 versehen, so dass der Rollbalg 19 auf dieser Seite mit atmosphärischem Luftdruck beaufschlagt ist.

Der Düsenkäfig 8 bildet eine vormontierbare Einheit 14, die aus den Düsenscheiben 10, 11 und der Membran 12 besteht.

Die Anschlaghaube 17 bildet eine Wegbegrenzung der Tragfeder 3 bei den verschiedenen Betriebszuständen sowie im Falle eines Crashs. Außerdem bildet die Anschlaghaube 17 einen Schutz der Tragfeder 3, die aus einem gummielastischen Werkstoff besteht. Die Anschlaghaube 17 und das Auflager 2 bestehen im hier gezeigten Ausführungsbeispiel aus einem Leichtmetall. Das Auflager 2 und die Anschlaghaube 17 bilden das Gehäuse 18.

Das Aggregatelager kann als kann als Motor- oder Getriebelager in Kraftfahrzeugen zur Anwendung gelangen.

Die Tragfeder 3 und der Düsenkäfig 8 sind einander ungehaftet zugeordnet und zwischen dem Auflager 2 und der Anschlaghaube 17 eingeklemmt. Durch die geometrische Abstimmung der Tragfeder 3, des Düsenkäfigs 8 und des Auflagers 2 und durch das Bördeln sind die Teile formschlüssig miteinander verbunden.
Durch diese Art der Verbindung/Montage können die Einzelteile, aus denen das Aggregatelager besteht, in unterschiedlichen Kombinationen besonders einfach miteinander zum Aggregatelager komplettiert werden.

## Patentansprüche

1. Hydraulisch dämpfendes Aggregatelager, umfassend ein Traglager (1) und ein Auflager (2), die durch eine Tragfeder (3) aus gummielastischem Werkstoff miteinander verbunden sind und einen Arbeits- (4) und einen Ausgleichsraum (5), die jeweils mit Dämpfungsflüssigkeit (6) gefüllt und durch einen Dämpfungskanal (7) flüssigkeitsleitend verbunden sind, wobei die Tragfeder (3) dem Traglager (1) und dem Auflager (2) ungebunden zugeordnet ist und wobei der Dämpfungskanal (7) durch einen von Traglager (1) und Auflager (2) separat hergestellten Düsenkäfig (8) begrenzt ist.

2. Aggregatelager nach Anspruch 1, **dadurch gekennzeichnet, dass** es kastenförmig ausgebildet ist.

3. Aggregatelager nach einem der Ansprüche 1 oder 2, **dadurch gekennzeichnet, dass** der Düsenkäfig (8) in Richtung (9) der eingeleiteten Schwingungen zwischen Arbeits- (4) und Ausgleichsraum (5) angeordnet ist und zwei in Richtung (9) der eingeleiteten Schwingungen benachbart zueinander angeordnete Düsenscheiben (10, 11) aufweist und dass in Richtung (9) der eingeleiteten Schwingungen zwischen den Düsenscheiben (10, 11) zur lsolierung höherfrequenter Schwingungen eine Membran (12) aus gummielastischem Werkstoff schwingfähig angeordnet ist.

4. Aggregatelager nach Anspruch 3, **dadurch gekennzeichnet, dass** die Düsenscheiben (10, 11) und die Membran (12) eine vormontierbare Einheit (13) bilden.

5. Aggregatelager nach einem der Ansprüche 1 bis 4, **dadurch gekennzeichnet, dass** der Dämpfungskanal (7) in Richtung (9) der eingeleiteten Schwingungen einstöckig ausgebildet ist.

6. Aggregatelager nach einem der Ansprüche 1 bis 4, **dadurch gekennzeichnet, dass** der Dämpfungskanal (7) in Richtung (9) der eingeleiteten Schwingungen doppelstöckig ausgebildet ist.

7. Aggregatelager nach Anspruch 6, **dadurch gekennzeichnet, dass** zwischen dem ersten (14) und dem zweiten Stock (15) innerhalb des Dämpfungskanals (7) ein heraustrennbares Schott (16) angeordnet ist.

8. Aggregatelager nach einem der Ansprüche 1 bis 7, **dadurch gekennzeichnet, dass** das Traglager (1) und die Tragfeder (3) von einer kuppelförmigen Anschlaghaube (17) überdeckt sind und dass die Anschlaghaube (17) mit dem Auflager (2) verbunden ist.

9. Aggregatelager nach einem der Ansprüche 1 bis 8, **dadurch gekennzeichnet, dass** das Auflager (2) und die Anschlaghaube (17) ein zweischaliges Gehäuse (18) bilden.

10. Aggregatelager nach einem der Ansprüche 1 bis 9, **dadurch gekennzeichnet, dass** das Auflager (2) und die Anschlaghaube (17) jeweils aus Leichtmetall oder Kunststoff bestehen.

11. Aggregatelager nach einem der Ansprüche 1 bis 10, **dadurch gekennzeichnet, dass** die Tragfeder (3) und der Düsenkäfig (8) jeweils separat hergestellt und einander ungehaftet zugeordnet sind.

12. Aggregatelager nach einem der Ansprüche 1 bis 11, **dadurch gekennzeichnet, dass** die Tragfeder (3) und der Düsenkäfig (8) zwischen dem Auflager (2) und der Anschlaghaube (17) ungebunden separat festgelegt sind.
